# EUROPÄISCHE PATENTSCHRIFT

(11) **EP 0 535 074 B1**
(45) Veröffentlichungstag und Bekanntmachung des Hinweises auf die Patenterteilung: **20.08.1997**
(21) Anmeldenummer: 91911460.3
(22) Anmeldetag: 07.06.1991
(51) Int. Cl.: C09K 7/06, C09K 7/02

(54) **FLIESSFÄHIGE BOHRLOCHBEHANDLUNGSMITTEL AUF BASIS VON POLYCARBONSÄUREESTERN**
FLUID BOREHOLE-CONDITIONING AGENT BASED ON POLYCARBOXYLIC ACID ESTERS
AGENTS DE TRAITEMENT FLUIDES POUR TROUS DE FORAGE A BASE D'ESTERS D'ACIDES POLYCARBOXYLIQUES

(30) Priorität: 16.06.1990 DE 4019266
(43) Veröffentlichungstag der Anmeldung: 07.04.1993
(73) Patentinhaber: Henkel Kommanditgesellschaft auf Aktien, 40191 Düsseldorf (DE)
(72) Erfinder: MÜLLER, Heinz, D-4019 Monheim (DE); HEROLD, Claus-Peter, D-4020 Mettmann (DE); VON TAPAVICZA, Stephan, D-4006 Erkrath (DE); FUES, Johann, F., D-4048 Grevenbroich (DE)
(86) Internationale Anmeldenummer: EP9101058
(87) Internationale Veröffentlichungsnummer: WO9119771

(56) Entgegenhaltungen:
- EP-A- 0 386 636
- EP-A- 0 398 113
- DE-A- 2 302 918
- DE-A- 3 521 711

## Beschreibung

Die Erfindung beschreibt neue, unter Normalbedingungen fließfähige Bohrlochbehandlungsmittel, die unter Mitverwendung einer Ölphase zusammengesetzt sind. Als charakteristisches Beispiel für Behandlungsmittel dieser Art wird im nachfolgenden die Erfindung anhand von Bohrspülflüssigkeiten und darauf aufgebauten Bohrspülschlämmen beschrieben. Das Anwendungsgebiet der erfindungsgemäßen Abwandlung von Hilfsflüssigkeiten der hier betroffenen Art ist jedoch nicht darauf beschränkt. In Betracht kommen insbesondere auch die Gebiete der Spotting Fluids, Spacer, Hilfsflüssigkeiten für Workover und Stimulierung und für das Fracturing.

Betroffen sind durch die Erfindung dabei sowohl Hilfsflüssigkeiten der genannten Art, die ölbasiert sind, d. h. mit einer geschlossenen Ölphase arbeiten, als auch Hilfsmittel, in denen die Ölphase in einer insbesondere wäßrigen geschlossenen Phase emulgiert ist. Bohrspülflüssigkeiten bzw. darauf aufgebaute Bohrspülschlämme sind hier charakteristische Beispiele der unterschiedlichen Möglichkeiten.

Bekannt sind einerseits Wasser-basierte Bohrspülungen mit einem Gehalt an etwa 1 bis 50 % emulgierter Ölphase - neben den anderen übichen Hilfsstoffen einer solchen Bohrspülung - die als Emulsionsspülungen bezeichnet werden. Auf der anderen Seite sind in breitem Umfang Öl-basierte Spülungssysteme im praktischen Einsatz, bei denen das Öl die fließfähige Phase oder doch wenigstens den überwiegenden Anteil der fließfähigen Phase bildet. Besondere Bedeutung haben hier die sogenannten Invert-Bohrspülschlämme, die auf der Basis von W/O-Emulsionen eine disperse wäßrige Phase in der geschlossenen Ölphase enthalten. Der Gehalt an disperser wäßriger Phase liegt üblicherweise im Bereich von etwa 5 bis 50 Gew.-%. Die Erfindung betrifft in gleicher Weise die beiden hier dargestellten Gebiete der Ölbasierten Spülungssysteme wie die Wasser-basierten Spülungssysteme auf Emulsionsbasis.

Der Einsatz der neuen fließfähigen Bohrlochbehandlungsmittel hat besondere Bedeutung für die Erschließung von Erdöl und Erdgas, insbesondere im marinen Bereich, ist aber nicht darauf eingeschränkt. Die neuen Systeme können allgemein Verwendung auch bei landgestützten Bohrungen finden, beispielsweise beim Geothermiebohren, beim Wasserbohren, bei der Durchführung geowissenschaftlicher Bohrungen und bei Bohrungen im Bergbaubereich.

### Zum Stand der Technik

Flüssige Spülsysteme zur Niederbringung von Gesteinsbohrungen unter Aufbringen des abgelösten Bohrkleins sind bekanntlich beschränkt eingedickte, fließfähige Systeme, die einer der drei folgenden Klassen zugeordnet werden können:

Rein wäßrige Bohrspülflüssigkeiten, Bohrspülsysteme auf Ölbasis, die in der Regel als sogenannte Invert-Emulsionsschlämme eingesetzt werden sowie die Wasser-basierten O/W-Emulsionen, die in der geschlossenen wäßrigen Phase eine heterogene feindisperse Ölphase enthalten.

Bohrspülungen auf geschlossener Ölbasis sind im allgemeinen als Drei-Phasen-System aufgebaut: Öl, Wasser und feinteilige Feststoffe. Die wäßrige Phase ist dabei heterogen fein-dispers in der geschlossenen Ölphase verteilt. Es ist eine Mehrzahl von Zusatzstoffen vorgesehen, insbesondere Emulgatoren, Beschwerungsmittel, fluid-loss-Additive, Alkalireserven, Viskositätsregler und dergleichen. Zu Einzelheiten wird beispielsweise verwiesen auf die Veröffentlichung P. A. Boyd et al. "New Base Oil Used in Low-Toxicity Oil Muds", Journal of Petroleum Technology, 1985, 137 bis 142 sowie R. B. Bennett "New Drilling Fluid Technology - Mineral Oil Mud", Journal of Petroleum Technology, 1984, 975 bis 981 sowie die darin zitierte Literatur.

Bohrspülflüssigkeiten auf Basis Wasser-basierter O/W-Emulsionssysteme nehmen in ihren Gebrauchseigenschaften eine Zwischenstellung ein zwischen den rein wäßrigen Systemen und den Ölbasierten Invertspülungen. Ausführliche Sachinformationen finden sich hier in der einschlägigen Fachliteratur, verwiesen sei beispielsweise auf das Fachbuch George R. Gray und H.C.H. Darley, "Composition in Properties of Oil Well Drilling Fluids", 4. Auflage, 1980/81, Gulf Publishing Company, Houston, und die umfangreiche darin zitierte Sach- und Patentliteratur sowie das Handbuch "Applied Drilling Engineering", Adam T. Borgoyne, Jr. et al., First Printing Society of Petroleum Engineers, Richardson, Texas (USA).

Die Ölphasen von Bohrspülungen der hier geschilderten Art und vergleichsweise aufgebauten anderen Bohrlochbehandlungsmitteln werden in der Praxis heute nahezu ausschließlich durch Mineralölfraktionen gebildet. Damit ist eine nicht unbeträchtliche Belastung der Umwelt verbunden, wenn beispielsweise die Bohrschlämme unmittelbar oder über das erbohrte Gestein in die Umwelt gelangen. Mineralöle sind nur schwer und anaerob praktisch nicht abbaubar und damit als langfristige Verschmutzung anzusehen.

Aus jüngerer Zeit bestehen einige Vorschläge zur Minderung dieser Problematik. So beschreiben die US-Patentschriften 4,374,737 und 4,481,121 Öl-basierte Invert-Bohrspülflüssigkeiten, in denen sogenannte nonpolluting oils Verwendung finden sollen. Als nonpolluting oils werden nebeneinander und gleichwertig aromatenfreie Mineralölfraktionen sowie Esteröle pflanzlichen und tierischen Ursprungs benannt. Bei diesen Esterölen handelt es sich um Triglyceride natürlicher Fettsäuren, die bekanntlich eine hohe Umweltverträglichkeit besitzen und gegenüber Kohlenwasserstoff-Fraktionen aus ökologischen Überlegungen deutliche Überlegenheit besitzen.

Die Anmelderin beschreibt in einer größeren Zahl älterer Anmeldungen Vorschläge zum Austausch der Mineralölfraktionen gegen ökologisch verträgliche leicht abbaubare Ölphasen. Dabei werden vier unterschiedliche Typen von Austauschölen dargestellt, die auch in Mischung miteinander eingesetzt werden können. Es handelt sich hierbei um ausgewählte oleophile Monocarbonsäureester, um wenigstens weitgehend wasserunlösliche unter Arbeitsbedingungen fließfähige Alkohole, um entsprechende Ether und um ausgewählte Kohlensäureester. Summarisch wird hier verwiesen auf die älteren Anmeldungen DE-A-38 42 659, DE-A-38 42 703, DE-A-39 07 391, DE-A-39 07 392, DE-A-39 03 785, DE-A-39 03 784, DE-A-39 11 238, DE-A-39 11 299 und DE-A-40 18 228. Alle hier genannten älteren Anmeldungen betreffen das Gebiet Öl-basierter Bohrspülsysteme, insbesondere vom W/O-Inverttyp. Wasser-basierte Emulsionsspülungen unter Verwendung von Ölphasen erhöhter Abbaubarkeit werden beschrieben in den älteren Anmeldungen DE-A-39 15 876, DE-A-39 15 875, DE-A-39 16 550 und der bereits genannten Anmeldung DE-A-40 18 228.

### Die Aufgabe der Erfindung und ihre technische Lösung

Die Erfindung geht von der Aufgabe aus, in Bohrlochbehandlungsmitteln der hier betroffenen Art als Ölphase und/oder als Additiv in der Ölphase wenigstens anteilsweise eine Stoffklasse einzusetzen, deren Verwendung bisher für dieses Anwendungsgebiet nicht beschrieben worden ist. Die Erfindung will dabei gleichzeitig im Sinne der Zielvorstellungen der genannten zahlreichen älteren Anmeldungen eine Ölphase zur Verfügung stellen, die sich durch hervorragende ökologische Verträglichkeit bei gleichzeitig guten - gegebenenfalls gegenüber bisherigen Ölphasen sogar verbesserten - Gebrauchseigenschaften im jeweiligen Anwendungsfall auszeichnet.

Die erfindungsgemäße Lehre geht von der Erkenntnis aus, daß ausgewählte Ester von Polycarbonsäuren hervorragende Austauschöle und/oder Additive im Sinne der erfindungsgemäßen Aufgabenstellung sind. Diese Polycarbonsäureester können dabei die jeweilige Ölphase als Ganzes bilden, sie können aber auch in Abmischung mit anderen Ölen, insbesondere aus der Klasse der sogenannten nonpolluting oils eingesetzt werden. Als Mischungskomponenten besonders geeignet sind Monocarbonsäureesteröle, Kohlensäurediester, oleophile Alkohole und/oder Ether aus den zuvor erwähnten älteren Anmeldungen der Anmelderin.

Gegenstand der Erfindung ist dementsprechend in einer ersten Ausführungsform die Verwendung von oleophilen Estern ökologisch verträglicher Polycarbonsäuren mit öllöslichen und ökologisch verträglichen monofunktionellen Alkoholen als Ölphase oder Bestandteil der Ölphase von Öl- oder Wasser-basierten Bohrspülungen und anderen fließfähigen Bohrlochbehandlungsmitteln.

Eine mögliche Ausführungsform dieser Darstellung der Erfindung liegt in der Verwendung dieser oleophilen Polycarbonsäureester in der Ölphase von Öl-basierten Spülungen, die insbesondere als Invertspülungen vom W/O-Typ zum Einsatz kommen, wobei die Polycarbonsäureester entweder als Zuschlagsstoff geringerer Konzentration in der geschlossenen Ölphase vorliegen, vorzugsweise hier aber den überwiegenden Teil der Ölphase ausmachen.

In einer anderen wichtigen Ausführungsform kommen die oleophilen Polycarbonsäureester in Wasser-basierten Emulsionsspülungen vom O/W-Typ zum Einsatz. Auch hier liegen sie in der dispersen Ölphase wenigstens in geringerer Konzentration vor, machen aber in einer besonders geeigneten Ausführungsform den überwiegenden Anteil dieser Phase aus.

Die Erfindung betrifft in einer weiteren Ausführungsform die im Temperaturbereich von 5 bis 20°C fließ- und pumpfähigen Bohrlochbehandlungsmittel, insbesondere Bohrspülungen auf Basis
- entweder einer geschlossenen Ölphase, gewünschtenfalls in Abmischung mit einer beschränkten Menge einer dispersen wäßrigen Phase (W/O-lnvert-Typ)
- oder einer dispersen Ölphase in einer geschlossenen wäßrigen Phase (O/W-Emulsions-Typ)
wobei das Kennzeichen dieser Ausgestaltung der Erfindung darin liegt, daß diese Bohrlochbehandlungsmittel in ihrer Ölphase oleophile Polycarbonsäureester auf Basis ökologisch verträglicher Polycarbonsäuren mit 2 bis 18 C-Atomen sowie 2 bis 4 Carboxylgruppen und öllöslicher und ökologisch verträglicher monofunktioneller Alkohole mit 4 bis 40 C-Atomen enthalten, die im Temperaturbereich von 0 bis 20 °C eine Wasserlöslichkeit von höchstens 1 Gew.-% und Flammpunkte von wenigstens 80 °C aufweisen, wobei die geschlossene Ölphase im Temperaturbereich von 0 bis 5 °C eine Brookfield (RVT)-Viskosität nicht über 55 mPas und die disperse Ölphase bei 20 °C eine Brookfield (RVT)-Viskosität bis 3 Mio mPas aufweist.

Für diese hier geschilderten Ausführungsformen der erfindungsgemäßen Lehre gilt weiterhin, daß in den Bohrlochbehandlungsmitteln die üblichen gelösten und/oder dispergierten Hilfsstoffe wie Viskositätsregler, Emulgatoren, fluid-loss-Additive, Netzmittel, feinteilige Beschwerungsstoffe, Salze, Alkalireserven und/oder Biozide enthalten sein können. Erfindungsgemäß gilt dabei die zusätzlich bevorzugte Maßnahme, daß überwiegend solche anorganischen und/oder organischen Hilfs- und Zuschlagsstoffe mitverwendet werden, die ökologisch und toxikologisch unbedenklich sind.

### Die Ausgestaltung der Erfindung in ihren Einzelheiten und bevorzugten Ausführungsformen

Oleophile Ester mehrfunktioneller Carbonsäuren - die im Rahmen der Erfindungsbeschreibung auch als oleophile Polycarbonsäureester bezeichnet werden - und ihre Herstellung sind der Fachwelt derart geläufig, daß sich nähere Hinweise auf einschlägige Literaturstellen erübrigen. Ihre besondere Brauchbarkeit für die Verwendung im Sinne der vorliegenden Lehre ist bisher jedoch nicht erkannt worden. Hier setzt das erfindungsgemäße Handeln ein.

Zunächst betrifft damit die Erfindung die Verwendung von
a) Estern von Polycarbonsäuren mit 2 bis 18 C-Atomen sowie 2 bis 4 Carboxylgruppen und monofunktionellen Alkoholen natürlichen oder synthetischen Ursprungs mit 4 bis 40 C-Atomen, die im Temperaturbereich von 0 bis 5 °C fließ- und pumpfähig sind, im Temperaturbereich von 0 bis 20 °C eine Wasserlöslichkeit von höchstens 1 Gew.-% und Flammpunkte von wenigstens 80 °C aufweisen,
oder von
b) im Temperaturbereich von 0 bis 5 °C fließ- und pumpfähigen Lösungen der vorstehend genannten Polycarbonsäureester in ökologisch verträglichen wasserunlöslichen Ölen als geschlossene oder disperse Ölphase von Öl- oder Wasser-basierten Bohrspülungen oder anderen fließfähigen Bohrlochbehandlungsmitteln, die im Falle der Öl-basierten Behandlungsmittel auch als W/O-Emulsion mit einer dispersen wäßrigen Phase vorliegen können, gewünschtenfalls weitere übliche Zusatzstoffe aufweisen und für die umweltschonende Erschließung von Erdöl- oder Erdgasvorkommen geeignet sind, wobei die geschlossene Ölphase von Öl-basierten Bohrspülungen im Temperaturbereich von 0 bis 5 °C eine Brookfield (RVT)-Viskosität nicht über 55 mPas und die disperse Ölphase von Wasser-basierten Bohrspülungen bei 20 °C eine Brookfield (RVT)-Viskosität bis 3 Mio mPas aufweist.

Aus dieser Darstellung der erfindungsgemäßen Lehre leitet sich ab, daß die oleophilen Polycarbonsäureester bezüglich ihrer physikalischen Beschaffenheit einen breiten Bereich abdecken können.

In einer ersten speziellen Ausführungsform will die Erfindung die oleophilen Polycarbonsäureester als auch bei niederen Temperaturen fließ- und pumpfähige Ölphase einsetzen, so daß die Ölphase - beispielsweise von Öl-basierten Spülungen - ausschließlich oder überwiegend aus diesen oleophilen Polycarbonsäureestern gebildet sein kann. Durch Einhaltung der im nachfolgenden noch im einzelnen geschilderten Strukturmerkmale für die Beschaffenheit der Polycarbonsäuren und der Alkoholkomponenten läßt sich diese Voraussetzung in an sich bekannter Weise problemlos einstellen.

Die Erfindung ist aber nicht auf diesen Typ von oleophilen Polycarbonsäureestern eingeschränkt. Auch hochviskose bis feste Materialien dieser Art können wertvolle Wirkstoffe im Sinne der erfindungsgemäßen Lehre sein. Verständlich wird das an den beiden folgenden Beispielen:

Für Wasser-basierte O/W-Emulsionsspülungen ist eine hohe Beweglichkeit der dispersen Ölphase nicht erforderlich, gegebenenfalls sogar nicht einmal erwünscht. Hier können vergleichsweise viskos eingestellte Ölphasen vorteilhaft sein, beispielsweise zur Sicherstellung guter Schmiereigenschaften. Die zweite Möglichkeit des Einsatzes hochviskoser oder fester Polycarbonsäureester im Sinne der erfindungsgemäßen Lehre ist dann gegeben, wenn die jeweilige Ölphase nur anteilsweise aus den Polycarbonsäureestern und im übrigen aus mitverwendeten vergleichsweise dünnflüssigen Ölen im Sinne der sogenannten nonpolluting oils gebildet ist.

Die vergleichsweise große Breite der jeweils gewählten spezifischen physikalischen Beschaffenheit der Polycarbonsäureester ist damit bedingt durch die unterschiedliche Formulierbarkeit von Bohrlochbehandlungsmitteln der erfindungsgemäß betroffenen Art, die sich einerseits als pump- und fließfähige Öl-basierte Materialien darstellen, deren Rheologie dann weitgehend durch die Beschaffenheit der geschlossenen Ölphase bestimmt wird, andererseits aber bei den Wasser-basierten Emulsionen vom O/W-Typ deren Fließ- und Pumpfähigkeit mittels der geschlossenen wäßrigen Phase sicherstellen. Eine zusätzliche Erweiterung leitet sich aus der im nachfolgenden im einzelnen geschilderten Möglichkeit ab, Mischungen der oleophilen Polycarbonsäureester mit anderen ökologisch verträglichen Ölphasen einzusetzen.

### Die oleophilen Polycarbonsäureester im Sinne der Erfindung

Ein übereinstimmendes Element für die Beschaffenheit der erfindungsgemäß einzusetzenden oleophilen Polycarbonsäureester ist die Forderung nach ökologischer Verträglichkeit und toxikologischer Unbedenklichkeit. Diese Bedingung wird letztlich durch die zur Veresterung eingesetzten Komponenten, d. h. sowohl durch die polyfunktionellen Carbonsäuren als durch die eingesetzten Alkohole, sichergestellt. Hier gilt das folgende:

Der Begriff der ökologischen Verträglichkeit erfaßt einerseits die biologische Abbaubarkeit im jeweils betroffenen Ökosystem, bei See-gestützten Bohrungen insbesondere also im marinen Ökosystem. Daneben verdient aber eine weiterführende Überlegung insbesondere bei der Auswahl geeigneter monofunktioneller Alkohole Beachtung. Hier ist zu berücksichtigen, daß im praktischen Einsatz der erfindungsgemäßen Ölphasen in Abmischung mit wäßrigen Phasen, insbesondere unter den im Bohrloch auftretenden erhöhten Temperaturen, partielle Esterspaltungen unter Ausbildung entsprechender Anteile der freien Alkohole auftreten können. Der freie Alkohol liegt dann in Abmischung mit den restlichen Bestandteilen der Ölphase vor. Hier kann es wichtig sein, daß die freien Alkohole so ausgewählt werden, daß inhaltions-toxische Belastungen der Mannschaft auf der Bohrstelle ausgeschlossen werden können.

Im Zusammenhang mit diesen Überlegungen gelten aber auch noch die folgenden Begriffsbestimmungen bzw. Definitionen:

Übereinstimmend gilt für alle Verbindungen bzw. Verbindungsgemische der hier gegebenen Definition, daß es sich um oleophile Polycarbonsäureester handelt, die nur eine geringe Restlöslichkeit in Wasser besitzen. Die Löslichkeit dieser Ester liegt im Temperaturbereich von 0 bis 20°C bei höchstens 1 Gew.-%, vorzugsweise liegt die Löslichkeit deutlich darunter, beispielsweise bei höchstens 0,5 oder gar bei höchstens 0,1 Gew.-%. Übereinstimmend zeichnen sich die erfindungsgemäß einzusetzenden Polycarbonsäureester durch ihre Flammpunktscharakteristik aus. Der Flammpunkt der erfindungsgemäß verwendeten oleophilen Ester soll bei mindestens 80 °C, vorzugsweise bei mindestens 100 °C liegen. Es kann aus Gründen der praktischen Betriebssicherheit wünschenswert sein, höhere Grenzwerte des Flammpunktes für die Ölphase einzusetzen, so daß Flammpunkte im Bereich von mindestens 135 °C und insbesondere von wenigstens 150 °C besondere praktische Bedeutung haben können.

Im einzelnen gelten zum Aufbau der Polycarbonsäureester im Sinne der erfindungsgemäßen Definition die folgenden Angaben:

Polyfunktionelle Carbonsäuren zum Aufbau der erfindungsgemäßen Esteröle enthalten wenigstens 2 Carboxylgruppen. Es kann aber auch im jeweiligen Molekül eine höhere Zahl von reaktiven Carboxylgruppen zur Esterbildung vorliegen, beispielsweise bis zu 4 Carboxylgruppen, wobei hier insbesondere Ester entsprechender Di- und/oder Tricarbonsäuren bedeutungsvoll sind.

Die Polycarbonsäuren enthalten 2 bis 18 C-Atome, Sollen Polycarbonsäureester mit hinreichender Fließ- und Pumpfähigkeit auch im Temperaturbereich von 0 bis 5 °C hergestellt werden, so kann Polycarbonsäuren mit 2 bis 12 C-Atomen und insbesondere mit 4 bis 10 C-Atomen besondere Bedeutung zukommen. Für den hier zuletzt geschilderten Fall sind insbesondere entsprechende Dicarbonsäuren bzw. die sich daraus ableitenden Dicarbonsäureester geeignet.

Die polyfunktionelle Carbonsäurekomponente kann dabei durch eine bestimmt ausgewählte Polycarbonsäure oder durch praktisch beliebige Gemische von Polycarbonsäuren bzw. entsprechenden Resten gebildet sein, solange die erfindungsgemäßen Bedingungen der ökologischen Verträglichkeit und der im jeweiligen Fall geforderten Rheologie berücksichtigt sind. Es leuchtet ein, daß diese Grundvoraussetzungen nicht nur durch die polyfunktionelle Carbonsäurekomponente(n) sondern auch durch die zur Veresterung mitverwendeten sonstigen Komponenten, insbesondere die Alkoholkomponenten mitbestimmt wird. Hierauf wird im nachfolgenden noch eingegangen.

Zur bevorzugten Struktur der polyfunktionellen Carbonsäuren gilt, daß in einer wichtigen Ausführungsform der Erfindung auf die Mitverwendung aromatischer Reste in diesem Molekülbestandteil verzichtet wird. Geeignet sind insbesondere geradkettige und/oder verzweigtkettige Grundstrukturen, wobei in den hier geschilderten Fällen grundsätzlich auch olefinisch ungesättigte Komponenten verwendet bzw. mitverwendet werden können. Dicarbonsäuren, insbesondere Alpha,Omega-ständige Dicarbonsäuren des Bereichs von 4 bis 10 C-Atomen sind großtechnisch verfügbare Ausgangskomponenten, die durch geeignete Umsetzung mit den nachfolgend noch geschilderten Alkoholen zu Polycarbonsäureestern frei wählbarer Rheologie umgesetzt werden können, wobei hier wiederum in an sich bekannter Weise durch wenigstens anteilsweise Auswahl von Reaktanten mit verzweigter Struktur gute rheologische Werte auch im angegebenen niederen Temperaturbereich um 0 °C eingestellt werden können. So ist beispielsweise bekannt, daß der symmetrische Diester von Adipinsäure und 2-Ethylhexanol einen Schmelzpunkt im Bereich von - 67 °C aufweist und im Bereich von 0 bis 5 °C eine fließ- und pumpfähige Flüssigphase darstellt. Entsprechendes gilt für vergleichbare Diester der Bernsteinsäure, der Maleinsäure, der Glutarsäure. Aber auch Diester der Azelainsäure oder Sebacinsäure mit verzweigten monofunktionellen Alkoholen können als vergleichsweise leicht bewegliche Flüssigphasen im Bereich der praktischen Anwendungstemperaturen hergestellt und erfindungsgemäß eingesetzt werden. Gleichzeitig zeichnen sich Ester der hier genannten Art durch hinreichend hohe Flammpunkte im Sinne der erfindungsgemäßen Definition aus.

Andere brauchbare polyfunktionelle Carbonsäuren sind beispielsweise die sogenannten Dimerfettsäuren, die als Handelsprodukt häufig beträchtliche Mengen höherer Carbonsäuren - insbesondere Trimersäuren - enthalten können und beispielsweise durch Oligomerisierung von Monocarbonsäuren insbesondere natürlichen Ursprungs erhalten werden können.

Zur Veresterung mit den polyfunktionellen Carbonsäuren sind monofunktionelle Alkohole bzw. auch Gemische dieser Typen geeignet. Im einzelnen gilt hier das folgende:

Zur Polycarbonsäureester-Bildung geeignete monofunktionelle Alkohole sind insbesondere öllösliche Verbindungen dieser Art mit wenigstens 4, vorzugsweise wenigstens 5 und insbesondere wenigstens 6 C-Atomen. Eine Obergrenze der Kohlenstoffzahl leitet sich praktisch nur aus Überlegungen zur Zugänglichkeit entsprechender Monoalkohole ab. Aus praktischen Gründen liegt sie bei etwa 40 C-Atomen. Monofunktionelle Alkohole des Bereichs C₈₋₃₆ und insbesondere C₈₋₂₄ können besonders geeignet sein. Diese Alkoholkomponenten sind vorzugsweise frei von aromatischen Molekülbestandteilen und enthalten insbesondere geradkettige und/oder verzweigte Kohlenwasserstoffketten natürlichen und/oder synthetischen Ursprungs. Die entsprechenden Alkohole und insbesondere solche Alkohole einer höheren C-Zahl, beispielsweise von C₁₆₋₂₄ können dabei auch wenigstens anteilsweise einfach oder auch mehrfach olefinisch ungesättigt sein. Der Einbau olefinischer Doppelbindungen beeinflußt in bekannter Weise die Rheologie entsprechender Ester im Sinne erhöhter Fließfähigkeit auch bei niedrigeren Temperaturen. Davon kann erfindungsgemäß Gebrauch gemacht werden. Verbunden damit ist dann allerdings eine gewisse Oxidationsanfälligkeit im praktischen Betrieb, die gegebenenfalls die Mitverwendung von stabilisierenden Antioxidantien und gegebenenfalls zusätzlich synergistisch wirkenden Hilfsstoffen erfordert. Die Absenkung hoher Rheologie auch in niedrige Temperaturbereiche wird insbesondere durch den Einsatz von verzweigten Kohlenwasserstoffketten gefördert. Hier kann durch geeignete Abstimmung ein Optimum an ökologischer Verträglichkeit und rheologischen Daten der Ölphase für den jeweils geforderten Einsatzzweck gefunden werden. Die Rheologie der Polycarbonsäureester kann dabei zusätzlich durch den Einsatz von Alkoholgemischen gesteuert werden. Auf diese Weise ist es durchaus möglich, Ester ausschließlich auf Basis von geradkettigen Fettalkoholen natürlichen Ursprungs des Bereichs von C₆₋₁₈, insbesondere des Bereichs von wenigstens überwiegend C₈₋₁₄ selbst dann einzusetzen, wenn an das Material auf Polycarbonsäureesterbasis hohe Anforderungen an gute Rheologie auch bei niederen Temperaturen gestellt werden.

Durch wenigstens anteilsweisen Einsatz von verzweigtkettigen monofunktionellen Alkoholen, beispielsweise entsprechenden Synthesealkoholen oder aus der Oligomerisierung von geradkettigen Einsatzmaterialien natürlichen Ursprungs, können hoch bewegliche Esteröle bis zu hohen C-Zahlen des angegebenen Bereichs erhalten werden.

Werden im Rahmen der Erfindung die oleophilen Polycarbonsäureester als Additiv den flüssigen Bohrlochbehandlungsmitteln zugegeben, so liegt in der Regel der Gehalt des Additivs hier bei höchstens 15 Gew.-%, insbesondere im Bereich von 1 bis 10 und häufig nicht mehr als 8 Gew.-% - Gew.-% jeweils bezogen auf die Ölphase. Die Eigenviskosität solcher Additive auf Polycarbonsäureester-Basis kann bis in den Feststoffbereich reichen. Vorzugsweise liegt ihre bei 20 °C bestimmte Brookfield(RVT)-Viskosität bei maximal 8 Mio. mPas und vorzugsweise nicht über 5 Mio. mPas. Auch im Falle der Wasser-basierten O/W-Emulsionsspülungen können vergleichsweise zähviskose Ölphasen auf Basis der oleophilen Polycarbonsäureester Verwendung finden, wobei hier geeignete Grenzwerte der Brookfield(RVT)-Viskosität bei 20 °C im Bereich bis 3 Mio. mPas, vorzugsweise bis zu 1 Mio. mPas liegen.

Der hier zuletzt dargestellte Fall der Verwendung erfindungsgemäß ausgestalteter Polycarbonsäureester unterscheidet sich damit bezüglich der Rheologieanforderungen deutlich von der zuvor erörterten Möglichkeit, die oleophilen Polycarbonsäureester ausschließlich oder überwiegend, d.h. zu mehr als 35 Gew.-%, als geschlossene Ölphase in Bohrlochbehandlungsmitteln auch bei niedrigen Temperaturen einzusetzen. Polycarbonsäureesteröle dieser Art sollen im Temperaturbereich von 0 bis 5 °C eine Brookfield(RVT)-Viskosität nicht über 55 mPas, vorzugsweise nicht über 45 mPas besitzen. Hier wird es dann beispielsweise auf dem Gebiet der Invert-Bohrspülungen vom W/O-Typ möglich, Öl-basierte Spülungen einer Plastischen Viskosität (PV) im Bereich von 10 bis 60 mPas und einer Fließgrenze (Yield Point YP) im Bereich von 2,4 bis 19,2 Pa (5 bis 40 lb/100 ft²) - jeweils bestimmt bei 50 °C - ausschließlich auf Basis der oleophilen Polycarbonsäureester zur Verfügung zu stellen.

Die Frage der Eigenviskosität des jeweils eingesetzten Polycarbonsäureesters bzw. Polycarbonsäureester-Gemisches verliert allerdings auch dann an Bedeutung, wenn diese erfindungsgemäß definierten Materialien in Abmischung mit anderen Ölphasen zum Einsatz kommen. Insbesondere gilt das, wenn die Polycarbonsäureester in der die Ölphase bildenden Abmischung untergeordnete Mengen sind und hier bestimmte Eigenschaften in bestimmter Weise ausgestalten, beispielsweise die erhöhte Schmierfähigkeit sicherstellen, ohne die Rheologie des Gesamtsystems entscheidend zu beeinflussen.

### Mögliche Mischungskomponenten für die Ölphase

Zur Abmischung im Rahmen der Erfindung geeignete Ölkomponenten sind zunächst einmal die in der heutigen Praxis der Bohrspülungen eingesetzten Mineralöle und dabei bevorzugt im wesentlichen aromatenfreie aliphatische und/oder cycloaliphatische Kohlenwasserstoff-Fraktionen. Auf den einschlägigen druckschriftlichen Stand der Technik und die auf dem Markt befindlichen Handelsprodukte wird verwiesen.

Besonders wichtige Mischungskomponenten sind allerdings im Sinne des erfindungsgemäßen Handelns umweltverträgliche oleophile Alkohole, entsprechende Ether, Kohlensäureesteröle und/oder Monocarbonsäure-Esteröle, wie sie im einzelnen in den eingangs genannten älteren Anmeldungen der Anmelderin ausführlich beschrieben sind. Der Gegenstand dieser älteren Anmeldungen wird hiermit ausdrücklich auch zum Offenbarungsinhalt der vorliegenden Erfindungsbeschreibung gemacht, wobei im nachfolgenden nur auf einige wesentliche Gesichtspunkte dieser älteren technischen Lehren verwiesen wird.

Den oleophilen Mischungskomponenten auf Basis Alkohole, Ether, Kohlensäureester und/oder Monocarbonsäureester können den überwiegenden Teil der Ölphase ausmachen. Polycarbonsäureester im erfindungsgemäßen Sinne werden dann zur Einstellung bestimmter Stoffeigenschaften mitverwendet. In der Regel wird hier die Menge des Polycarbonsäureesters aber wenigstens 1 Gew.-%, insbesondere immerhin einige Gew.-% der Ölphase, beispielsweise wenigstens 5 Gew.-% vorzugsweise bis zu 35 Gew.-% ausmachen. Oleophile Alkohole können beispielsweise als Hydrolyse-stabile Hauptkomonente der Ölphase für zahlreiche Einsatzzwecke interessant sein, häufig zeigen solche Alkohole jedoch unzureichende Schmierfähigkeit. Polycarbonsäureester der erfindungsgemäßen Definition sind demgegenüber wirkungsvolle Schmiermittel. So kann es also beispielsweise zweckmäßig sein, gemischte Ölphasen mit einem Gehalt von wenigstens 10 Gew.-% des Polycarbonsäureesters, insbesondere 15 bis 50 Gew.-% des Polycarbonsäureesters einzusetzen. Insbesondere bei Arbeitsbedingungen, die verringerten hydrolytischen Angriff bedingen, beispielsweise also bei Öl-basierten Spülungen und dabei auch solchen vom W/O-lnverttyp kann der überwiegende oder gar der alleinige Einsatz der Polycarbonsäureester besonders zweckmäßig sein. Mengenverhältnisse von 50 bis 95 Gew.-% der Ölphase sind für gemischte Ölphasen der hier betroffenen Art charakteristisch.

Wichtig ist, daß auch alle diese Zusatzstoffe Flammpunkte von wenigstens 80 °C und bevorzugt von wenistens 100 °C besitzen, wobei substantiell darüberliegende Werte, beispielsweise solche oberhalb 135 °C besonders geeignet sein können. Wichtig ist für die optimale Nutzung der erfindungsgemäßen Zielsetzung weiterhin die Forderung, daß diese Alkohole, Ether und/oder Esteröle eine biologisch bzw. ökologisch verträgliche Konstitution aufweisen und insbesondere auch unter Berücksichtigung einer partiellen Hydrolyse inhalations-toxikologisch unbedenklich sind. Im einzelnen gelten sinngemäß die zuvor zu den Polycarbonsäureestern bzw. den hier eingesetzten Alkoholkomponenten angestellten Überlegungen.

Auch zu den durch Partialhydrolyse mitverwendeter Monocarbonsäureesteröle gebildeten Carbonsäuren bedarf es einiger Hinweise. Hier können in Abhängigkeit von der speziellen Konstitution der eingesetzten Carbonsäuren 2 grundsätzliche Typen - mit fließendem Übergang - unterschieden werden: Monocarbonsäuren, die zu Carbonsäuresalzen mit Emulgatorwirkung oder zu Inertsalzen führen. Entscheidend ist hier insbesondere die jeweilige Kettenlänge des frei werdenden Carbonsäuremoleküls. Zu berücksichtigen ist weiterhin das gewöhnlich über die Alkalireserve der Bohrspülung vorliegende salzbildende Kation. Allgemein gelten hier die folgenden Regeln:

Niedere Carbonsäuren, beispielsweise solche mit 1 bis 5 C-Atomen, führen zur Bildung von Inertsalzen, beispielsweise zur Bildung entsprechender Acetate oder Propionate. Fettsäuren höherer Kettenlänge und insbesondere solche des Bereichs von C₁₂₋₂₄ führen zu Verbindungen mit Emulgator-Wirkung. Nähere Einzelheiten finden sich in den angegebenen älteren Anmeldungen zu Carbonsäureesterölen als oleophile Phase in Bohrspülungen vom W/O-Typ bzw. vom O/W-Typ.

Werden oleophile Monocarbonsäureesteröle als Mischungskomponente mitverwendet, so fallen sie erfindungsgemäß bevorzugt in wenigstens eine der nachfolgenden Unterklassen:
a) Ester aus C₁₋₅-Monocarbonsäuren und mono- und/oder mehrfunktionellen Alkoholen, wobei Reste aus ein wertigen Alkoholen wenigstens 6, bevorzugt wenigstens 8 C-Atome aufweisen und die mehrwertigen Alkohole bevorzugt 2 bis 6 C-Atome im Molekül besitzen,
b) Ester aus Monocarbonsäuren synthetischen und/oder natürlichen Ursprungs mit 6 bis 16 C-Atomen, insbesondere Ester entsprechender aliphatisch gesättigter Monocarbonsäuren und mono- und/oder mehrfunktionellen Alkoholen der unter a) genannten Art,
c) Ester olefinisch ein- und/oder mehrfach ungesättigter Monocarbonsäuren mit wenigstens 16, insbesondere 16 bis 24 C-Atomen und insbesondere monofunktionellen geradkettigen und/oder verzweigten Alkoholen.

Ausgangsmaterialien für die Gewinnung zahlreicher in diese Unterklassen fallenden Monocarbonsäuren, insbesondere höherer Kohlenstoffzahl, sind pflanzliche und/oder tierische Öle. Genannt seien Kokosöl, Palmkernöl und/oder Babassuöl, insbesondere als Einsatzmaterialien für die Gewinnung von Monocarbonsäuren des überwiegenden Bereichs bis C₁₈ und von im wesentlichen gesättigten Komponenten. Pflanzliche Esteröle, insbesondere für olefinischein- und gegebenenfalls mehrfach ungesättigte Carbonsäuren des Bereichs von C₁₆₋₂₄ sind beispielsweise Palmöl, Erdnußöl, Rizinusöl, Sonnenblumenöl und insbesondere Rüböl. Carbonsäuren tierischen Ursprungs dieser Art sind insbesondere entsprechende Gemische aus Talg und/oder Fischölen wie Heringsöl.

### Additive in der Öl-basierten bzw. Wasser-basierten Spülung

Es gelten hier die allgemeinen Gesetzmäßigkeiten für die Zusammensetzung der jeweiligen Behandlungsflüssigkeiten, für die im nachfolgenden anhand entsprechender Bohrspülschlämme beispielhafte Angaben gemacht werden.

Invert-Bohrspülschlämme enthalten üblicherweise zusammen mit der geschlossenen Ölphase die feindisperse wäßrige Phase in Mengen von 5 bis 45 Gew.-% und vorzugsweise in Mengen von 5 bis 25 Gew.-%.

Für die Rheologie bevorzugter Invert-Bohrspülungen im Sinne der Erfindung gelten die folgenden rheologischen Daten: Plastische Viskosität (PV) im Bereich von 10 bis 60 mPas, bevorzugt von 15 bis 40 mPas, Fließgrenze (Yield Point YP) im Bereich von 2,4 bis 19,2 Pa (5 bis 40 lb/100 ft²), bevorzugt von 4,8 bis 12 Pa (10 bis 25 16/100 ft²) - jeweils bestimmt bei 50 °C. Für die Bestimmung dieser Parameter, für die dabei eingesetzten Meßmethoden sowie für die im übrigen übliche Zusammensetzung der hier beschriebenen Invert-Bohrspülungen gelten im einzelnen die Angaben des Standes der Technik, die eingangs zitiert wurden und ausführlich beispielsweise beschrieben sind in dem Handbuch "Manual Of Drilling Fluids Technology" der Firma NL-Baroid, London, GB, dort insbesondere unter Kapitel "Mud Testing - Tools and Techniques" sowie "Oil Mud Technology", das der interessierten Fachwelt frei zugänglich ist.

In Emulsionsspülungen liegt die disperse Ölphase üblicherweise in Mengen von wenigstens 1 bis 2 Gew.-%, häufig in Mengen von wenigstens 5 Gew.-%, vorzugsweise in Mengen von wenigstens 7 bis 8 Gew.-% im Rahmen einer O/W-Emulsion vor. Der Ölanteil sollte hier vorzugsweise nicht mehr als 50 Gew.-% und insbesondere nicht mehr als 40 Gew.-% ausmachen - Gew.-% jeweils bezogen auf die Summe der unbeschwerten Flüssiganteile Öl/Wasser.

Neben dem Wassergehalt kommen alle für vergleichbare Spülungstypen vorgesehene Additive in Betracht, deren Zusatz in üblicher Weise mit einem ganz bestimmt angestrebten Eigenschaftsbild der Bohrspülung verbunden ist. Die Additive können wasserlöslich, öllöslich und/oder wasser- bzw. öl-dispergierbar sein.

Klassische Additive können sein: Emulgatoren, fluid-loss-Additive, Strukturviskosität aufbauende lösliche und/oder unlösliche Stoffe, Alkalireserven, Mittel zur Inhibierung des unerwünschten Wasseraustausches zwischen erbohrten Formationen - z. B Wasserquellbare Tone und/oder Salzschichten - und der z. B. Wasser-basierten Spülflüssigkeit, Netzmittel zum besseren Aufziehen der emulgierten Ölphase auf Feststoffoberflächen, z. B. zur Verbesserung der Schmierwirkung, aber auch zur Verbesserung des oleophilen Verschlusses freigelegter Gesteinsformationen, bzw. Gesteinsflächen, Biocide, beispielsweise zur Hemmung des bakteriellen Befalls von O/W-Emulsionen und dergleichen. Im einzelnen ist hier auf den einschlägigen Stand der Technik zu verweisen, wie er beispielsweise in der eingangs zitierten Fachliteratur ausführlich beschrieben wird, siehe hierzu insbesondere Gray und Darley, aao., Kapitel 11, "Drilling Fluid Components". Nur auszugsweise sei dementsprechend zitiert:

Feindisperse Zusatzstoffe zur Eröhung der Spülungsdichte: Weit verbreitet ist das Bariumsulfat (Baryt), aber auch Calciumcabonat (Calcit) oder das Mischcarbonat von Calcium und Magnesium (Dolomit) finden Verwendung.

Mittel zum Aufbau der Strukturviskosität, die gleichzeitig auch als fluid-loss-Additive wirken: In erster Linie ist hier Bentonit bzw. hydrophobierter Bentonit zu nennen. Für Salzwasserspülungen kommt anderen vergleichbaren Tonen, insbesondere Attapulgit und Sepiolith in der Praxis beträchtliche Bedeutung zu.

Auch der Mitverwendung organischer Polymerverbindungen natürlichen und/oder synthetischen Ursprungs kann beträchtliche Bedeutung in diesem Zusammenhang zukommen. Zu nennen sind hier insbesondere Stärke oder chemisch modifizierte Stärken, Cellulosederivate wie Carboxymethylcellulose, Guargum, Xanthangum oder auch rein synthetische wasserlösliche und/oder wasserdispergierbare Polymerverbindungen, insbesondere von der Art der hochmolekularen Polyacrylamidverbindungen mit oder ohne anionische bzw. kationische Modifikation.

Verdünner zur Viskositätsregulierung: Die sogenannten Verdünner können organischer oder anorganischer Natur sein, Beispiele für organische Verdünner sind Tannine und/oder Qebracho-Extrakt. Weitere Beispiele hierfür sind Lignit und Lignitderivate, insbesondere Lignosulfonate. Wie zuvor allerdings angegeben, wird in einer bevorzugten Ausführungsform der Erfindung auf die Mitverwendung toxischer Komponenten gerade hier verzichtet, wobei hier in erster Linie die entsprechenden Salze mit toxischen Schwermetallen wie Chrom und/oder Kupfer zu nennen sind. Ein Beispiel für anorganische Verdünner sind Polyphosphatverbindungen.

Emulgatoren: Hier kommt es entscheidend auf den Spülungstyp an. Für die Praxis brauchbare Emulgatoren zur Ausbildung von W/O-Emulsionen sind insbesondere ausgewählte oleophile Fettsäuresalze, beispielsweise solche auf Basis von Amidoaminverbindungen. Beispiele hierfür werden in der bereits zitierten US-A-4,374,737 und der dort zitierten Literatur beschrieben.

Zur Herstellung von O/W-Emulsionen werden in an sich bekannter Weise andere Emulgatoren benötigt. Es hat sich allerdings gezeigt, daß eine stabile Dispergierung im Sinne einer O/W-Dispersion sehr viel leichter möglich sein kann, als die entsprechende Dispergierung von reinen Mineralölen, wie sie nach dem Stand der Technik eingesetzt werden. Hier liegt eine erste Erleichterung. Weiterhin ist zu berücksichtigen, daß bei der Mitverwendung von Esterölen durch eine Partialverseifung unter Mitwirkung geeigneter Alkalireserven beim Einsatz längerkettiger Carbonsäureester wirkungsvolle O/W-Emulgatoren nachgebildet werden und damit zur Stabilisierung des Systems beitragen.

Den unerwünschten Wasseraustausch mit beispielsweise Tonen inhibierende Zusatzstoffe: In Betracht kommen hier die aus dem Stand der Technik zu öl- und wasserbasierten Bohrspülungen bekannten Zusatzstoffe. Insbesondere handelt es sich dabei um Halogenide und/oder Carbonate der Alkali- und/oder Erdalkalimetalle, wobei entsprechenden Kaliumsalzen gegebenenfalls in Kombination mit Kalk besondere Bedeutung zukommen kann.

Verwiesen sei beispielsweise auf die entsprechenden Veröffentlichungen in "Petroleum Engineer International", September 1987, 32 - 40 und "World Oil", November 1983, 93 - 97.

Alkalireserven: In Betracht kommen hier auf das Gesamtverhalten der Spülung abgestimmte anorganische und/oder organische Basen, insbesondere entsprechende basische Salze bzw. Hydroxide von Alkali- und/oder Erdalkalimetallen sowie organische Basen. Art und Menge dieser basischen Komponenten sind dabei in bekannter Weise so gewählt und aufeinander abgestimmt, daß die Bohrlochbehandlungsmittel auf einen pH-Wert im Bereich von etwa neutral bis mäßig-basisch, insbesondere auf den Bereich von 7,5 bis 11 eingestellt sind.

Auf dem Gebiet der organischen Basen ist begrifflich zu unterscheiden zwischen wasserlöslichen organischen Basen - beispielsweise Verbindungen vom Typ des Diethanolamins - und praktisch wasserunlöslichen Basen ausgeprägt oleophilen Charakters, wie sie in der eingangs zitierten älteren Anmeldung der Anmelderin DE-A-39 03 785 als Additiv in Invert-Bohrspülschlämmen auf Esteröl-Basis geschildert sind. Gerade die Mitverwendung auch solcher öllöslichen Basen im Rahmen der vorliegenden Erfindung fällt in die neue Lehre. Oleophile Basen dieser Art, die sich insbesondere durch wenigstens einen längeren Kohlenwasserstoffrest mit beispielsweise 8 bis 36 C-Atomen auszeichnen, sind dann allerdings nicht in der wäßrigen Phase sondern in der Ölphase gelöst. Hier kommt diesen basischen Komponenten mehrfache Bedeutung zu. Einerseits können sie unmittelbar als Alkalireserve wirken. Zum anderen verleihen sie dem dispergierten Öltröpfchen einen gewissen positiven Ladungszustand und führen damit zu erhöhter Interaktion mit negativen Flächenladungen, wie sie insbesondere bei hydrophilen und zum Ionenaustausch befähigten Tonen anzutreffen sind. Erfindungsgemäß kann damit Einfluß auf die hydrolytische Spaltung und den oleophilen Verschluß wasserreaktiver Gesteinsschichten genommen werden.

Die Menge der jeweils eingesetzten Hilfs- und Zusatzstoffe bewegt sich grundsätzlich im üblichen Rahmen und kann damit der zitierten einschlägigen Literatur entnommen werden.

### Beispiele

In den nachfolgenden Beispielen 1 bis 4 werden unter Einhaltung einer Standardrezeptur für Öl-basierte Bohrspülsysteme vom W/O-Typ entsprechende Bohrspülsysteme zusammengestellt, wobei die geschlossene Ölphase jeweils durch oleophile Polycarbonsäureester im Sinne der erfindungsgemäßen Definition gebildet ist. Am ungealterten und am gealterten Material werden die Viskositätskennwerte wie folgt bestimmt:

Messung der Viskosität bei 50 °C in einem Fann-35-Viskosimeter der Fa. Baroid Drilling Fluids Inc.. Es werden in an sich bekannter Weise bestimmt die Plastische Viskosität (PV) in mPas, die Fließgrenze (YP) sowie die Gelstärke jeweils im Pa bzw in (lb/100 ft²) nach 10 sec. und 10 min.. Bestimmt wird weiterhin der fluid loss-Wert (HTHP).

Die Alterung der jeweiligen Bohrspülung wird durch Behandlung für den Zeitraum von 16 h bei 125 °C im Autoklaven - in sogenannten Roller-oven - vorgenommen.

Die Bohrspülungssysteme werden gemäß der folgenden Grundrezeptur in an sich bekannter Weise zusammengestellt:

| | |
|---|---|
| 230 ml | Polycarbonsäureester-Öl |
| 26 ml | Wasser |
| 6 g | organophiler Bentonit (GELTONE^{R} der Fa. Baroid Drilling Fluids Inc.) |
| 12 g | organophiler Lignit (DURATONE^{R} der Fa. Baroid Drilling Fluids Inc.) |
| 2 g | Kalk |
| 6 g | W/O-Emulgator (EZ-mul^{R} der Fa. Baroid Drilling Fluids Inc.) |
| 6 g | W/O-Emulgator (INVERMUL^{R} NT der Fa. Baroid Drilling Fluids Inc.) |
| 346 g | Baryt |
| 9,2 g | CaCl₂ × 2 H₂O |

### Beispiel 1

Die Ölphase wird durch Di-2-ethylhexylsebacat (Handelsprodukt EDENOR^{R}-DEHS der Anmelderin) gebildet. Die am ungealterten und am gealterten Material bestimmten Kennzahlen - wie zuvor angegeben - sind in der nachfolgenden tabellarischen Zusammenfassung aufgeführt.

| | Ungealtertes Material | Gealtertes Material |
|---|---|---|
| Plastische Viskosität (PV) | 56 | 54 |
| Fließgrenze (YP) | 12 (25) | 8,1 (17) |
| Gelstärke | | |
| 10 sec. | 4,8 (10) | 2,9 (6) |
| 10 min. | 9,6 (20) | 5,7 (12) |
| | | |
| HTHP 5 ml | | |

### Beispiel 2

Als geschlossene Ölphase wird ein Polycarbonsäureester auf Basis Di-2-ethylhexyladipat eingesetzt.

Es werden am ungealterten und gealterten Material die folgenden Werte bestimmt:

| | Ungealtertes Material | Gealtertes Material |
|---|---|---|
| Plastische Viskosität (PV) | 25 | 26 |
| Fließgrenze (YP) | 10,1 (21) | 7,2 (15) |
| Gelstärke | | |
| 10 sec. | 3,8 (8) | 6,7 (14) |
| 10 min. | 13,9 (29) | 12,4 (26) |
| | | |
| HTHP 3 ml | | |

### Beispiel 3

Als geschlossene Ölphase wird hier Di-n-butyladipat (Handelsprodukt EDENOR^{R}-DBA der Anmelderin) eingesetzt. Die Menge der einen Emulgator-Komponente (EZ-mul^{R}) wird auf 4,2 g reduziert.

Die am ungealterten und gealterten Material bestimmten Kennzahlen sind die folgenden:

| | Ungealtertes Material | Gealtertes Material |
|---|---|---|
| Plastische Viskosität (PV) | 28 | 34 |
| Fließgrenze (YP) | 12,9 (27) | 12,4 (26) |
| Gelstärke | | |
| 10 sec. | 9,6 (20) | 6,7 (14) |
| 10 min. | 13,9 (29) | 12,4 (26) |
| | | |
| HTHP 27 ml | | |

### Beispiel 4

Wird Beispiel 3 wiederholt, jedoch mit der vollen Rezepturmenge des betroffenen Emulgators (EZ-mul^{R}) gearbeitet, werden die folgenden Werte in der angegebenen Weise bestimmt:

| | Ungealtertes Material | Gealtertes Material |
|---|---|---|
| Plastische Viskosität (PV) | 27 | 28 |
| Fließgrenze (YP) | 13,4 (28) | 6,7 (14) |
| Gelstärke | | |
| 10 sec. | 7,2 (15) | 3,4 (7) |
| 10 min. | 11 (23) | 6,2 (13) |
| | | |
| HTHP 44 ml | | |

### Vergleichsbeispiel A

Zum Vergleich wird in der eingangs angegebenen Rezeptur ein Carbonsäureesteröl als geschlossene Ölphase eingesetzt, das ein Estergemisch aus im wesentlichen gesättigten Fettsäuren auf Basis Palmkern und 2-Ethylhexanol darstellt. Es geht zum weitaus überwiegenden Teil auf C_{12/14}-Fettsäuren zurück und entspricht der folgenden Spezifikation:
C₈: 3,5 bis 4,5 Gew.-%
C₁₀: 3,5 bis 4,5 Gew.-%
C₁₂: 65 bis 70 Gew.-%
C₁₄: 20 bis 24 Gew.-%
C₁₆: ca. 2 Gew.-%
C₁₈: 0,3 bis 1 Gew.-%

Das Estergemisch liegt als hellgelbe Flüssigkeit mit einem Flammpunkt oberhalb 165°C und einer Viskosität (Brookfield 20 °C) von 7 bis 9 mPas vor.

Die an der ungealterten und der gealterten Spülung bestimmten Kenndaten sind die folgenden:

| | Ungealtertes Material | Gealtertes Material |
|---|---|---|
| Plastische Viskosität (PV) | 34 | 34 |
| Fließgrenze (YP) | 4,8 (10) | 3,8 (8) |
| Gelstärke | | |
| 10 sec. | 2,9 (6) | 2,4 (5) |
| 10 min. | 4,8 (10) | 4,8 (10) |
| | | |
| HTHP 4 ml | | |

Werden als Ölphase Stoffgemische aus den hier betroffenen Esterölen - Polycarbonsäureester gemäß Beispielen 1 bis 4 und Monocarbonsäureester gemäß Vergleichsbeispiel A - hergestellt und im Rahmen der eingangs angegebenen Rezeptur eingesetzt und vermessen, so werden bei praktisch beliebigen Mischungsverhältnissen vergleichbare Meßwerte am ungealterten und am gealterten Material bestimmt.

## Patentansprüche

1. Verwendung von
a) Estern von Polycarbonsäuren mit 2 bis 18 C-Atomen sowie 2 bis 4 Carboxylgruppen und monofunktionellen Alkoholen natürlichen oder synthetischen Ursprungs mit 4 bis 40 C-Atomen, die im Temperaturbereich von 0 bis 5 °C fließ- und pumpfähig sind, im Temperaturbereich von 0 bis 20 °C eine Wasserlöslichkeit von höchstens 1 Gew.-% und Flammpunkte von wenigstens 80 °C aufweisen,
oder von
b) im Temperaturbereich von 0 bis 5 °C fließ- und pumpfähigen Lösungen der vorstehend genannten Polycarbonsäureester in ökologisch verträglichen wasserunlöslichen Ölen
als geschlossene oder disperse Ölphase von Öl- oder Wasser-basierten Bohrspülungen oder anderen fließfähigen Bohrlochbehandlungsmitteln, die im Falle der Öl-basierten Behandlungsmittel auch als W/O-Emulsion mit einer dispersen wäßrigen Phase vorliegen können, gewünschtenfalls weitere übliche Zusatzstoffe aufweisen und für die umweltschonende Erschließung von Erdöl- oder Erdgasvorkommen geeignet sind, wobei die geschlossene Ölphase von Öl-basierten Bohrspülungen im Temperaturbereich von 0 bis 5 °C eine Brookfield (RVT)-Viskosität nicht über 55 mPas und die disperse Ölphase von Wasser-basierten Bohrspülungen bei 20 °C eine Brookfield (RVT)-Viskosität bis 3 Mio mPas aufweist.

2. Verwendung nach Anspruch 1, dadurch gekennzeichnet, daß Polycarbonsäureester verwendet werden, deren Polycarbonsäure- und Alkoholkomponenten so ausgewählt sind, daß auch im praktischen Einsatz unter partieller Esterverseifung keine toxikologischen, insbesondere keine inhalations-toxikologischen Gefährdungen ausgelöst werden.

3. Verwendung nach Ansprüchen 1 und 2, dadurch gekennzeichnet, daß oleophile Ester von ökologisch verträglichen Di- und/oder Tricarbonsäuren mit gleichen oder verschiedenen öllöslichen und ökologisch verträglichen monofunktionellen Alkoholen eingesetzt werden.

4. Verwendung nach Ansprüchen 1 bis 3, dadurch gekennzeichnet, daß die wasserunlöslichen Polycarbonsäureester einen substantiellen Anteil der geschlossenen oder dispersen Ölphase ausmachen und dabei diese zu mehr als 35 Gew.-% ausbilden oder aber als Additiv der Ölphase in Mengen von 1 bis 35 Gew.-%, insbesondere in Mengen von 5 bis 15 Gew.-% zugesetzt sind.

5. Verwendung nach Ansprüchen 1 bis 4, dadurch gekennzeichnet, daß als Polycarbonsäureester mit hinreichender Fließ- und Pumpfähigkeit auch im Temperaturbereich von 0 bis 5 °C Ester von Polycarbonsäuren mit 2 bis 12, insbesondere 4 bis 10 C-Atomen eingesetzt werden und hier entsprechenden Dicarbonsäureestern besondere Bedeutung zukommt.

6. Verwendung nach Ansprüchen 1 bis 5, dadurch gekennzeichnet, daß symmetrische oder gemischte Polycarbonsäureester und/oder Mischungen unterschiedlicher Polycarbonsäureester eingesetzt werden, die sich von ökologisch verträglichen monofunktionellen Alkoholen mit wenigstens 5 C-Atomen, vorzugsweise mit wenigstens 8 C-Atomen ableiten.

7. Verwendung nach Ansprüchen 1 bis 6, dadurch gekennzeichnet, daß sich die Alkoholreste von toxikologisch und insbesondere inhalations-toxikologisch unbedenklichen Verbindungen ableiten, wobei Reste monofunktioneller Alkohole mit 8 bis 24 C-Atomen bevorzugt sind.

8. Verwendung nach Ansprüchen 1 bis 7, dadurch gekennzeichnet, daß Polycarbonsäureester zum Einsatz kommen, deren Säure- und Alkoholreste frei von aromatischen Molekülbestandteilen sind und die sich insbesondere von geraden und/oder verzweigten, gegebenenfalls ungesättigten Kohlenwasserstoffketten natürlichen und/oder synthetischen Ursprungs ableiten.

9. Verwendung nach Ansprüchen 1 bis 8, dadurch gekennzeichnet, daß die oleophilen Polycarbonsäureester Flammpunkte von wenigstens 135 °C aufweisen.

10. Verwendung nach Ansprüchen 1 bis 9, dadurch gekennzeichnet, daß Polycarbonsäureester zusammen mit anderen verträglichen wasserunlöslichen Ölen eingesetzt werden, wobei hier entsprechende oleophile Alkohole, Ether, Esteröle von Monocarbonsäuren und/oder Kohlensäureesteröle bevorzugt sind, deren Ester-bildende Alkoholkomponenten sich von mono- und/oder mehrfunktionellen Alkoholen ableiten und dabei die Alkohole vorzugsweise auch hier so ausgewählt sind, daß im praktischen Einsatz unter partieller Esterverseifung keine toxikologischen, insbesondere keine inhalations-toxikologischen Gefährdungen ausgelöst werden.

11. Verwendung nach Ansprüche 1 bis 10, dadurch gekennzeichnet, daß als mitverwendete Esteröle von Monocarbonsäuren und/oder Kohlensäureesteröle entsprechende Ester von monofunktionellen Alkoholen natürlichen und/oder synthetischen Ursprungs und ausgeprägt oleophilen Charakters mit vorzugsweise wenigstens 6, insbesondere wenigstens 8 C-Atomen, verwendet werden.

12. Verwendung nach Ansprüchen 1 bis 11, dadurch gekennzeichnet, daß auch beim Einsatz von Abmischungen der oleophilen Polycarbonsäureester mit weiteren löslichen Ölphasen solche Mischungskomponenten eingesetzt werden, daß die Flammpunkte der Ölmischphase bei wenigstens 100 °C und vorzugsweise oberhalb 135 °C liegen.

13. Verwendung nach Ansprüchen 1 bis 12, dadurch gekennzeichnet, daß Polycarbonsäureester oder ihre Abmischungen mit homogen mischbaren ökologisch verträglichen Ölen eingesetzt werden, die beim Einsatz als geschlossene Ölphase Erstarrungswerte (Fließ- und Stockpunkt) unterhalb 0 °C, vorzugsweise unterhalb -5 °C aufweisen und dabei im Temperaturbereich von 0 bis 5 °C eine Brookfield (RVT)-Viskosität nicht über 45 mPas besitzen, während im Falle der O/W-Emulsionsspülungen die Ölphase bei 20 °C eine Brookfield (RVT)-Viskosität bis 1 Mio mPas besitzen kann.

14. Verwendung nach Ansprüchen 1 bis 13, dadurch gekennzeichnet, daß die Ölphase Polycarbonsäureester in Abmischung mit Esterölen von Monocarbonsäuren aus wenigstens einer der nachfolgenden Unterklassen enthält:
a) Ester aus C₁₋₅-Monocarbonsäuren und mono- und/oder mehrfunktionellen Alkoholen, wobei Reste aus einwertigen Alkoholen wenigstens 6, bevorzugt wenigstens 8 C-Atome aufweisen und die mehrwertigen Alkohole bevorzugt 2 bis 6 C-Atome im Molekül besitzen,
b) Ester aus Monocarbonsäuren synthetischen und/oder natürlichen Ursprungs mit 6 bis 16 C-Atomen, insbesondere Ester entsprechender aliphatisch gesättigter Monocarbonsäuren und mono- und/oder mehrfunktionellen Alkoholen der unter a) genannten Art,
c) Ester olefinisch ein- und/oder mehrfach ungesättigter Monocarbonsäuren mit wenigstens 16, insbesondere 16 bis 24 C-Atomen und insbesondere monofunktionellen geradkettigen und/oder verzweigten Alkoholen.

15. Verwendung nach Ansprüchen 1 bis 14, dadurch gekennzeichnet, daß die Polycarbonsäureester in Bohrspülungen zum Einsatz kommen, die als W/O-Invertemulsion vorliegen und eine feindisperse wäßrige Phase in Mengen von 5 bis 45 Gew.-% , vorzugsweise von 5 bis 25 Gew.-% enthalten, oder als O/W-Emulsion ausgebildet sind und dabei die disperse Ölphase 1 bis 50 Gew.-% ausmacht.

16. Verwendung nach Ansprüchen 1 bis 15, dadurch gekennzeichnet, daß Hilfs- und Zuschlagsstoffe im Rahmen der Öl- oder Wasser-basierten Bohrlochbehandlungsmittel mitverwendet werden, die ihrerseits ökologisch und toxikologisch unbedenklich, insbesondere frei von löslichen toxischen Schwermetallverbindungen sind.

17. Im Temperaturbereich von 5 bis 20 °C fließ- und pumpfähige Bohrlochbehandlungsmittel, insbesondere Bohrspülungen, entweder auf Basis einer geschlossenen Ölphase, gewünschtenfalls in Abmischung mit einer beschränkten Menge einer dispersen wäßrigen Phase (W/O-Invert-Typ) oder auf Basis einer O/W-Emulsion mit disperser Ölphase in der geschlossenen wäßrigen Phase, gewünschtenfalls enthaltend gelöste und/oder dispergierte übliche Hilfsstoffe wie Viskositätsbildner, Emulgatoren, fluid-loss-Additive, Netzmittel, feinteilige Beschwerungsstoffe, Salze, Alkalireserven und/oder Biozide, dadurch gekennzeichnet, daß sie in ihrer Ölphase oleophile Polycarbonsäureester auf Basis ökologisch verträglicher Polycarbonsäuren mit 2 bis 18 C-Atomen sowie 2 bis 4 Carboxylgruppen und öllöslicher und ökologisch verträglicher monofunktioneller Alkohole mit 4 bis 40 C-Atomen enthalten, die im Temperaturbereich von 0 bis 20 °C eine Wasserlöslichkeit von höchstens 1 Gew.-% und Flammpunkte von wenigstens 80 °C aufweisen, wobei die geschlossene Ölphase im Temperaturbereich von 0 bis 5 °C eine Brookfield (RVT)-Viskosität nicht über 55 mPas und die disperse Ölphase bei 20 °C eine Brookfield (RVT)-Viskosität bis 3 Mio mPas aufweist.

18. Bohrlochbehandlungsmittel nach Anspruch 17, dadurch gekennzeichnet, daß im Fall der Öl-basierten Behandlungsmittel die geschlossene Ölphase
a) zum überwiegenden Anteil aus praktisch wasserunlöslichen und im Temperaturbereich von 0 bis 5 °C fließ- und pumpfähigen Polycarbonsäureestern monofunktioneller Alkohole natürlichen und/oder synthetischen Ursprungs
oder
b) durch im angegebenen Temperaturbereich fließ- und pumpfähige Lösungen von praktisch wasserunlöslichen Polycarbonsäureestern monofunktioneller Alkohole in ökologisch verträglichen wasserunlöslichen Ölen bevorzugt aus der Klasse oleophiler Alkohole, Ether, Esteröle von Monocarbonsäuren und/oder Kohlensäureesteröle gebildet ist.

19. Bohrlochbehandlungsmittel nach Ansprüchen 17 und 18, dadurch gekennzeichnet, daß als Polycarbonsäureester oleophile Ester von ökologisch verträglichen Di- und/oder Tricarbonsäuren mit gleichen oder verschiedenen öllöslichen und ökologisch verträglichen monofunktionellen Alkoholen vorliegen.

20. Bohrlochbehandlungsmittel nach Ansprüchen 17 bis 19, dadurch gekennzeichnet, daß die Polycarbonsäureester auf Basis inhalations-toxikologisch unbedenklicher monofunktioneller Alkohole aufgebaut sind, die wenigstens 8 C-Atome aufweisen, frei von aromatischen Resten und dabei insbesondere geradkettig und/oder verzweigt sind und gegebenenfalls auch wenigstens anteilsweise ungesättigt sein können.

21. Bohrlochbehandlungsmittel nach Ansprüchen 17 bis 20, dadurch gekennzeichnet, daß die Ölphase Flammpunkte oberhalb 135 °C aufweist.

22. Bohrlochbehandlungsmittel nach Ansprüchen 17 bis 21, dadurch gekennzeichnet, daß bei Mitverwendung von Esterölen der Kohlensäure und/oder von Monocarbonsäuren auch die in diesen Mischungskomponenten vorliegenden Anteile monofunktioneller Alkohole so ausgewählt sind, daß bei einer im Gebrauch auftretenden partiellen Esterhydrolyse im praktischen Betrieb inhalations-toxikologisch unbedenkliche Alkohole gebildet werden.

23. Bohrlochbehandlungsmittel nach Ansprüchen 17 bis 22, dadurch gekennzeichnet, daß sie als Invert-Bohrspülungen vom W/O-Typ ausgebildet sind und dabei vorzugsweise die disperse wäßrige Phase in Mengen von 5 bis 45 Gew.-%, insbesondere in Mengen von 5 bis 25 Gew.-% enthalten, während im Fall der Wasser-basierten O/W-Emulsionsspülungen die Menge der dispersen Ölphase im Bereich von 1 bis 50 Gew.-%, vorzugsweise von 8 bis 50 Gew.-% liegt.

24. Bohrlochbehandlungsmittel nach Ansprüchen 17 bis 23, dadurch gekennzeichnet, daß sie als Öl-basierte Bohrspülungen vom Invert-Typ eine Plastische Viskosität (PV) im Bereich von 10 bis 60 mPas und eine Fließgrenze (Yield Point YP) im Bereich von 2,4 bis 19,2 Pa (5 bis 40 lb/100 ft²) - jeweils bestimmt bei 50 °C - aufweisen.

25. Bohrlochbehandlungsmittel nach Ansprüchen 17 bis 24, dadurch gekennzeichnet, daß die geschlossene Ölphase des Invert-Schlammes im Temperaturbereich von 0 bis 5 °C eine Brookfield (RVT)-Viskosität nicht über 45 mPas aufweist.

26. Bohrlochbehandlungsmittel nach Ansprüchen 17 bis 25, dadurch gekennzeichnet, daß auch die mitverwendeten üblichen Hilfs- und Zuschlagsstoffe unter dem Kriterium ökologischer Verträglichkeit ausgewählt und insbesondere frei von löslichen toxischen Schwermetallverbindungen sind.

27. Bohrlochbehandlungsmittel nach Ansprüchen 17 bis 26, dadurch gekennzeichnet, daß sie auf einen pH-Wert im Bereich von 7,5 bis 11 eingestellt sind.

## Claims

1. The use of
a) esters of polycarboxylic acids containing 2 to 18 carbon atoms and 2 to 4 carboxyl groups and monohydric alcohols of natural and/or synthetic origin containing 4 to 40 carbon atoms which are free-flowing and pumpable at temperatures of 0 to 5°C, have a solubility in water at temperatures of 0 to 20°C of at most 1% by weight and flash points of at least 80°C
or of
b) solutions of the above-mentioned polycarboxylic acid esters in ecologically safe water-insoluble oils which are flowable and pumpable at temperatures of 0 to 5°C
as the continuous or dispersed oil phase of oil- or water-based drilling fluids or other free-flowing borehole servicing formulations which, in the case of the oil-based servicing formulations, may even be present as a w/o emulsion with a dispersed aqueous phase, may optionally contain other typical additives and are suitable for the ecologically safe development of, for example, oil and gas occurrences, the continuous oil phase of oil-based drilling fluids having a Brookfield (RVT) viscosity at temperatures of 0 to 5°C of no more than 55 mPas and the dispersed oil phase of water-based drilling fluids having a Brookfield (RVT) viscosity at 20°C of up to 3 million mPas.

2. The use claimed in claim 1, characterized in that polycarboxylic acid esters of which the polycarboxylic acid and alcohol components are selected so that no toxicological risks and, in particular, no inhalation-toxicological risks occur through partial ester saponification, even under practical conditions, are used.

3. The use claimed in claims 1 and 2, characterized in that oleophilic esters of ecologically safe dicarboxylic and/or tricarboxylic acids with the same or different oil-soluble and ecologically safe monohydric alcohols are used.

4. The use claimed in claims 1 to 3, characterized in that the water-insoluble polycarboxylic acid esters make up an at least substantial part of the continuous or dispersed oil phase, forming more than about 35% by weight thereof, or are added as an additive to the oil phase in quantities of about 1 to about 35% by weight and, more particularly, in quantities of about 5 to 15% by weight.

5. The use claimed in claims 1 to 4, characterized in that esters of polycarboxylic acids containing 2 to 12 carbon atoms and, more particularly, 4 to 10 carbon atoms are used as the polycarboxylic acid esters with sufficient flowability and pumpability, even at temperatures of 0 to 5°C, particular significance being attributed to corresponding dicarboxylic acid esters.

6. The use claimed in claims 1 to 5, characterized in that symmetrical or mixed polycarboxylic acid esters and/or mixtures of various polycarboxylic acid esters which are derived at least partly from ecologically safe monohydric alcohols containing at least 5 carbon atoms and preferably at least 8 carbon atoms are used.

7. The use claimed in claims 1 to 6, characterized in that the alcohol components are derived from toxicologically safe and, in particular, inhalation-toxicologically safe compounds, residues of monohydric alcohols containing 8 to 24 carbon atoms being preferred.

8. The use claimed in claims 1 to 7, characterized in that polycarboxylic acid esters are used of which the acid and alcohol components are free from aromatic molecule components and which are derived in particular from linear and/or branched, optionally unsaturated hydrocarbon chains of natural and/or synthetic origin.

9. The use claimed in claims 1 to 8, characterized in that the oleophilic polycarboxylic acid esters have flash points of at least 135°C.

10. The use claimed in claims 1 to 9, characterized in that polycarboxylic acid esters are used together with other compatible water-insoluble oils, preferably corresponding oleophilic alcohols, ethers, ester oils of monocarboxylic acids and/or carbonic acid ester oils of which the ester-forming alcohol components are derived from monohydric and/or polyhydric alcohols and the alcohols again preferably being selected so that no toxicological risks and, in particular, no inhalation-toxicological risks occur through partial ester saponification under practical conditions.

11. The use claimed in claims 1 to 10, characterized in that the co-used ester oils of monocarboxylic acids and/or carbonic acid ester oils are corresponding esters of monohydric alcohols of natural and/or synthetic origin and decidedly oleophilic character preferably containing at least 6 and, more preferably, at least 8 carbon atoms.

12. The use claimed in claims 1 to 11, characterized in that, even where mixtures of the oleophilic polycarboxylic acid esters with other soluble oil phases are used, the mixture components used are selected in such a way that the oil mixed phase has flash points of at least about 100°C and preferably above about 135°C.

13. The use claimed in claims 1 to 12, characterized in that polycarboxylic acid esters or mixtures thereof with homogeneously miscible ecologically safe oils which, when used as the continuous oil phase, have solidification values (flow point and pour point) below 0°C and preferably below -5°C and which have a Brookfield (RVT) viscosity at 0 to 5°C of not more than 45 mPas, the oil phase of o/w emulsion muds having a Brookfield (RVT) viscosity at 20°C of up to about 1 million mPas, are used.

14. The use claimed in claims 1 to 13, characterized in that the oil phase contains polycarboxylic acid esters in admixture with ester oils of monocarboxylic acids from at least one of the following subclasses:
a) esters of C₁₋₅ monocarboxylic acids and monohydric and/or polyhydric alcohols, residues of monohydric alcohols containing at least 6 and preferably at least 8 carbon atoms and the polyhydric alcohols preferably containing 2 to 6 carbon atoms in the molecule,
b) esters of monocarboxylic acids of synthetic and/or natural origin containing 6 to 16 carbon atoms, more particularly esters of corresponding aliphatically saturated monocarboxylic acids and monohydric and/or polyhydric alcohols of the type mentioned in a),
c) esters of mono- and/or polyolefinically unsaturated monocarboxylic acids containing at least 16 and, more particularly, 16 to 24 carbon atoms, more especially monohydric linear and/or branched alcohols.

15. The use claimed in claims 1 to 14, characterized in that the polycarboxylic acid esters are used in drilling muds which are present in the form of a w/o invert emulsion and which contain a finely dispersed aqueous phase in quantities of around 5 to 45% by weight and preferably in quantities of around 5 to 25% by weight or are formulated as an o/w emulsion in which the dispersed oil phase makes up around 1 to 50% by weight.

16. The use claimed in claims 1 to 15, characterized in that auxiliaries and additives which are ecologically and toxicologically safe and, in particular, are free from soluble toxic heavy metal compounds are used in the oil- or water-based borehole servicing fluids.

17. Borehole servicing formulations, more particularly drilling fluids, flowable and pumpable at temperatures of 5 to 20°C based either on a continuous oil phase, optionally in admixture with a limited quantity of dispersed aqueous phase (w/o invert type) or on an o/w emulsion with a dispersed oil phase in the continuous aqueous phase, optionally containing dissolved and/or dispersed auxiliaries of the usual type, such as thickeners, emulsifiers, fluid loss additives, wetting agents, fine-particle weighting agents, salts, alkali reserves and/or biocides, characterized in that they contain in their oil phase oleophilic polycarboxylic acid esters based on ecologically safe polycarboxylic acids containing 2 to 18 carbon atoms and 2 to 4 carboxyl groups and oil-soluble and ecologically safe monohydric alcohols containing 4 to 40 carbon atoms which have a solubility in water at temperatures of 0 to 20°C of at most 1% by weight and flash points of at least 80°C, the continuous oil phase having a Brookfield (RVT) viscosity at temperatures of 0 to 5°C of no more than 55 mPas and the dispersed oil phase having a Brookfield (RVT) viscosity at 20°C of up to 3 million mPas.

18. Borehole servicing formulations as claimed in claim 17, characterized in that, in the case of oil-based formulations, the continuous oil phase is formed
a) predominantly by substantially water-insoluble polycarboxylic acid esters of monohydric alcohols of natural and/or synthetic origin which flow freely and can be pumped at temperatures of 0 to 5°C
or
b) by solutions - flowable and pumpable at temperatures in the above range - of substantially water-insoluble polycarboxylic acid esters of monohydric alcohols in ecologically safe water-insoluble oils, preferably from the class of oleophilic alcohols, ethers, ester oils of monocarboxylic acids and/or carbonic acid ester oils.

19. Borehole servicing formulations as claimed in claims 17 and 18, characterized in that oleophilic esters of ecologically safe dicarboxylic and/or tricarboxylic acids with the same or different oil-soluble and ecologically safe monohydric alcohols are present as the polycarboxylic acid esters.

20. Borehole servicing formulations as claimed in claims 17 to 19, characterized in that the polycarboxylic acid esters are based on inhalation-toxicologically safe monohydric alcohols which contain at least 8 carbon atoms, are free from aromatic residues and, in particular, are linear and/or branched and may even be at least partly unsaturated.

21. Borehole servicing formulations as claimed in claims 17 to 20, characterized in that the oil phase has flash points above 135°C.

22. Borehole servicing formulations as claimed in claims 17 to 21, characterized in that, where ester oils of carbonic acid and/or monocarboxylic acids are used, the monofunctional alcohols present in these mixture components are also selected in such a way that no inhalation-toxicologically harmful alcohols are formed in the event of partial ester hydrolysis under practical conditions.

23. Borehole servicing formulations as claimed in claims 17 to 22, characterized in that they are formulated as invert drilling muds of the w/o type and preferably contain the dispersed aqueous phase in quantities of about 5 to 45% by weight and more particularly in quantities of about 5 to 25% by weight whereas, in the case of water-based o/w emulsion muds, the dispersed oil phase is present in a quantity of from about 1 to 50% by weight and preferably in a quantity of from about 8 to 50% by weight.

24. Borehole servicing formulations as claimed in claims 17 to 23, characterized in that, as oil-based drilling muds of the invert type, they have a plastic viscosity (PV) in the range from about 10 to 60 mPas and a yield point (YP) in the range from about 2.4 to 19.2 Pa (5 to 40 lb/100 ft²), determined in either case at 50°C.

25. Borehole servicing formulations as claimed in claims 17 to 24, characterized in that the continuous oil phase of the invert mud has a Brookfield (RVT) viscosity at 0 to 5°C of preferably no more than 45 mPas.

26. Borehole servicing formulations as claimed in claims 17 to 25, characterized in that the standard auxiliaries and additives used are also selected for ecological compatibility and, for example, are free from soluble toxic heavy metal compounds.

27. Borehole servicing formulations as claimed in claims 17 to 26, characterized in that they are adjusted to a pH value in the range from 7.5 to 11.

## Revendications

1. Utilisation de :
- a) esters d'acide polycarboxylique ayant de 2 à 18 atomes de carbone ainsi que de 2 à 4 groupes carboxyle et d'alcools monofonctionnels d'origine naturelle ou synthétique ayant de 4 à 40 atomes de carbone, qui sont dans la plage de températures allant de 0 à 5°C aptes à l'écoulement et au pompage, possèdent dans la zone de température de 0 à 20°C, une solubilité dans l'eau d'au plus 1% en poids, et des points d'inflammation d'au moins 80°C ou de,
- b) solutions aptes à l'écoulement et au pompage dans la zone de températures de 0 à 5°C, des esters d'acide polycarboxylique cités précédemment dans des huiles non solubles dans l'eau, écologiquement compatibles, en tant que phase huileuse en cycle fermé ou disperse de boues de forage basées sur l'huile sur l'eau, ou d'autres agents de traitement de puits de forage aptes à l'écoulement qui peuvent se présenter dans le cas d'agent de traitement basé sur l'huile aussi sous forme d'émulsion W/O avec une phase aqueuse dispersée, possèdent si désiré d'autres additifs usuels, et conviennent pour l'exploitation qui ménage l'environnement de gisements de pétrole ou de gaz naturel, dans laquelle la phase huileuse en cycle fermé des boues de forage basées sur l'huile possède dans la zone de températures allant de 0 à 5°C, une viscosité Brookfield (RVT) qui n'est pas supérieure à 55 mPas et la phase huileuse dispersée des boues de forage basée sur l'eau à 20°C possède une viscosité Brookfield (RVT) allant jusqu'à 3 millions de mPas.

2. Utilisation selon la revendication 1,
caractérisée en ce que
l'on utilise des esters d'acide polycarboxylique dont les composants acide polycarboxylique et alcool sont choisis de telle sorte qu'aussi en utilisation pratique, aucun danger toxicologique, en particulier aucun danger toxicologique par inhalation par saponification partielle de l'ester ne soit déclenché.

3. Utilisation selon les revendications 1 et 2,
caractérisée en ce qu'
on met en oeuvre des esters oléophiles d'acide di et/ou tricarboxylique compatible écologiquement avec des alcools monofonctionnels identiques ou différents, solubles dans l'huile et compatibles écologiquement.

4. Utilisation selon les revendications 1 à 3,
caractérisée en ce que
les esters d'acide polycarboxylique insolubles dans l'eau représentent une proportion substantielle de la phase huileuse en cycle fermé ou disperse, et ainsi ceux-ci forment pour plus de 35 % en poids ou cependant sont ajoutés comme additifs de la phase huileuse en quantités allant de 1 à 35 % en poids, en particulier en quantités allant de 5 à 15 % en poids.

5. Utilisation selon les revendications 1 à 4,
caractérisée en ce qu'
on met en oeuvre comme ester d'acide polycarboxylique avec une aptitude à l'écoulement et au pompage satisfaisante aussi dans la zone de températures de 0 à 5°C, un ester d'acide polycarboxylique ayant de 2 à 12, en particulier de 4 à 10 atomes de carbone et qu'il revient ici aux esters d'acide dicarboxylique correspondants, une importance particulière.

6. Utilisation selon les revendications 1 à 5,
caractérisée en ce qu'
on met en oeuvre des esters d'acide polycarboxylique symétriques ou mixtes et/ou des mélanges de différents acides polycarboxyliques qui dérivent d'alcools monofonctionnels compatibles écologiquement ayant au moins 5 atomes de carbone, de préférence ayant au moins 8 atomes de carbone.

7. Utilisation selon les revendications 1 à 6,
caractérisée en ce que
les radicaux d'alcool dérivent de composés inoffensifs sur le plan toxicologique et en particulier sur le plan de la toxicologie par inhalation, dans lesquels les restes d'alcools monofonctionnels ayant de 8 à 24 atomes de carbone sont préférés.

8. Utilisation selon les revendications 1 à 7,
caractérisée en ce que
les esters d'acide polycarboxylique viennent à utilisation, dont les restes d'acide et d'alcool sont dépourvus de constituant de molécule aromatique et qui dérivent en particulier de chaînes d'hydrocarbure droites et/ou ramifiées éventuellement non saturées, d'origine naturelle et/ou synthétique.

9. Utilisation selon les revendications 1 à 8,
caractérisée en ce que
les esters d'acide polycarboxylique oléophiles possèdent dos points d'inflammation d'au moins 135°C.

10. Utilisation selon les revendications 1 à 9,
caractérisée en ce qu'
on met en oeuvre des esters d'acide polycarboxylique conjointement avec d'autree huiles insolubles dans l'eau, compatibles, parmi lesquels ici des alcools, des éthers oléophiles correspondants, des huiles estérifiées d'acide monocarboxylique et/ou des huiles estérifiées d'acide carbonique sont préférés, dont les composants alcool qui forment un ester dérivent d'alcools mono- et/ou plurifonctionnels et pour cela les alcools sont choisis e préférence aussi ici de telle sorte qu'en utilisation pratique sous saponification partielle de l'ester aucun danger toxicologique, en particulier aucun danger de toxicologie par inhalation ne soit déclenché.

11. Utilisation selon les revendications 1 à 10,
caractérisée en ce que
comme huiles estérifiées utilisées conjointement d'acide monocarboxylique et/ou les huiles estérifiées d'acide carbonique, les esters correspondants d'alcools monofonctionnels d'origine naturelle et/ou synthétique et de caractère nettement oléophile avec de préférence au moins 6, en particulier au moins 8 atomes de carbones, sont utilisés.

12. Utilisation selon les revendications 1 à 11,
caractérisée en ce qu'
on met en oeuvre des composants de mélange aussi lors de l'utilisation de mélanges d'esters d'acide polycarboxylique oléophiles avec une autre phase huileuse soluble, tels que les points d'inflammation de la phase mixte huileuse se situent à au moins 100°C et de préférence au-dessus de 135°C.

13. Utilisation selon les revendications 1 à 12,
caractérisée en ce qu'
on met en oeuvre des esters d'acide polycarboxylique ou leurs mélanges avec des huiles compatibles écologiquement miscibles d'une manière homogène, qui possèdent lors de l'utilisation comme phase huileuse continue, des valeurs de solidification (point d'écoulement et de solidification) en dessous de 0°C, de préférence en dessous de -5°C et ainsi possèdent dans la zone de températures de 0 à 5°C une viscosité Brookfield (RVT) qui n'est pas supérieure à 45 mPas alors que dans le cas de boues en émulsion O/W, la phase huileuse peut posséder à 20°C une viscosité Brookfield (RVT) allant jusqu'à 1 million de mPas.

14. Utilisation selon les revendications 1 à 13,
caractérisée en ce que
la phase huileuse contient des esters d'acide polycarboxylique en mélange avec des huiles estérifiées d'acides monocarboxyliques provenant d'au moins une des sous-classes subséquentes :
a) les esters à base d'acides monocarboxyliques en C₁ à C₅ et d'alcools mono et/ou plurifonctionnels, dans lesquels les radicaux à base d'alcool monovalent possèdent au moins 6, de préférence au moins 8 atomes de carbone, et les alcools plurivalents possèdent de préférence de 2 à 6 atomes de carbone dans la molécule,
b) les esters à base d'acides monocarboxyliques d'origine synthétique et/ou naturelle, ayant de 6 à 16 atomes de carbone, en particulier les esters d'acide monocarboxylique aliphatique saturé correspondant et d'alcools mono- et/ou plurifonctionnels du type cité en a),
c) les esters d'acide monocarboxylique non saturé oléfiniquement une et/ou plusieurs fois ayant au moins 16, en particulier de 16 à 24 atomes de carbone et en particulier des alcools monofonctionnels à chaîne droite et/ou ramifiée.

15. Utilisation selon les revendications 1 à 14,
caractérisée en ce que
les esters d'acide polycarboxylique dans les boues de forage viennent à utilisation, boues qui se présentent sous forme d'émulsion inverse W/O et renferment une phase aqueuse finement disperse en quantités allant de 5 à 45 % en poids, de préférence de 5 à 25 % en poids, ou sont formées comme émulsion O/W et pour cela la phase huileuse disperse représente de 1 à 50 % en poids.

16. Utilisation selon les revendications 1 à 15,
caractérisée en ce que
des adjuvants et des additifs sont utilisés conjointement dans le cadre des agents de traitement des puits de forage basés sur l'huile ou sur l'eau qui sont de leur côté inoffensifs sur le plan écologique et toxicologique, en particulier dépourvus de dérivés de métaux lourds toxiques, solubles.

17. Agents de traitement de puits de forage aptes a l'écoulement et au pompage dans la zone de températures de 5 à 20°C, en particulier boues de forage, soit à base de phase huileuse en cycle fermé, si désiré en mélange avec une quantité limitée d'une phase aqueuse dispersée (du type inverse W/O) soit à base d'une émulsion O/W avec des phases huileuses dispersées dans la phase aqueuse en cycle fermé, si désiré contenant des adjuvants usuels dissous et/ou mis en dispersion comme des agents formateurs de viscosité, des agents émulsionnants, des additifs contre la perte de liquide, des agents de mouillage, des substances d'alourdissement finement divisées, des sels, des réserves d'alcali et/ou des biocides,
caractérisés en ce qu'
ils renferment dans leur phase huileuse des esters d'acide polycarboxylique oléophiles à base d'acides polycarboxyliques compatibles écologiquement ayant de 2 à 18 atomes de carbone, ainsi que de 2 à 4 groupes carboxyle et des alcools monofonctionnels solubles dans l'huile et compatibles écologiquement, ayant de 4 à 40 atomes de carbone, qui possèdent dans la zone de température de 0 à 20°C une solubilité dans l'eau d'au maximum 1 % en poids et des points d'inflammation d'au moins 80°C pour lesquels la phase huileuse continue dans la zone de températures de 0 à 5°C possède une viscosité Brookfield (RVT) qui n'est pas supérieure à 55 mPas et la phase huileuse disperse à 20°C possède une viscosité Brookfield (RVT) allant jusqu'à 3 millions de mPas.

18. Agents de traitement de puits de forage selon la revendication 17,
caractérisés en ce que
dans le cas de l'agent de traitement basé sur l'huile, la phase huileuse continue est formée :
a) pour une partie prédominante d'esters d'acide monocarboxylique pratiquement insolubles dans l'eau et aptes à l'écoulement et au pompage dans la zone de température de 0 à 5°C, d'alcools monofonctionnels d'origine naturelle et/ou synthétique, ou
b) par des solutions aptes à l'écoulement ou au pompage dans la zone de température indiquée d'esters d'acide polycarboxylique pratiquement insolubles dans l'eau et d'alcool monofonctionnel dans des huiles insolubles dans l'eau compatibles écologiquement, de préférence choisis dans la classe des alcools oléophiles, des éthers et des huiles estérifiées d'acide monocarboxylique et/ou d'huile estérifiées d'acide carbonique.

19. Agents de traitement de puits de forage selon les revendications 17 et 18,
caractérisés en ce que
comme ester d'acide polycarboxylique il y a des esters oléophiles d'acides di- ou tricarboxylique, compatibles écologiquement avec des alcools identiques ou différents, solubles dans l'huile et compatibles écologiquement.

20. Agents de traitement de puits de forage selon les revendications 17 à 19,
caractérisés en ce que
les esters d'acide polycarboxylique sont constitués à base d'alcools monofonctionnels inoffensifs sur le plan de la toxicologie par inhalation qui possèdent au moins 8 atomes de carbone, sont dépourvus de restes aromatiques et pour cela sont en particulier à chaîne droite et/ou ramifiés et le cas échéant peuvent être aussi au moins partiellement, non saturés.

21. Agents de traitement de puits de forage selon les revendications 17 à 20,
caractérisés en ce que
la phase huileuse possède des points d'inflammation au-dessus de 135°C.

22. Agents de traitement de puits de forage selon les revendications 17 à 21,
caractérisés en ce que
par utilisation conjointe d'huiles estérifiées d'acide carbonique et/ou d'acide monocarbonique aussi les fractions présentes dans ces composants de mélange d'alcools monofonctionnels sont choisies de telle sorte que lors d'une hydrolyse d'ester partielle qui survient dans l'utilisation des alcools inoffensifs sur le plan de la toxicologie par inhalation sont formés dans le fonctionnement pratique.

23. Agents de traitement de puits de forage selon les revendications 17 à 22,
caractérisés en ce qu'
ils sont formés sous forme de boues de forage inverse de type W/O et pour cela de préférence renferment la phase aqueuse dispersée en quantités allant de 5 à 45 % en poids, en particulier en quantités de 5 à 25 % en poids, alors que dans le cas des boues en émulsion O/W basées sur l'eau, la quantité de phase huileuse dispersée se situe dans la zone de 1 à 50% en poids, de préférence de 8 à 50 % en poids.

24. Agents de traitement de puits de forage selon les revendications 17 à 23,
caractérisés en ce qu'
ils possèdent en tant que boues de forage basées sur l'huile du type inverse, une viscosité plastique (PV) dans la zone de 10 à 60 mPas et une limite d'écoulement (Yield point YP) dans la zone de 2,4 à 19,2 Pa (5 à 40 lb/100 ft²) à chaque fois déterminée à 50°C.

25. Agents de traitement de puits de forage selon les revendications 17 à 24,
caractérisés en ce que
la phase huileuse continue de l'émulsion inverse possède dans la zone de température de 0 à 5°C, une viscosité Brookfield (RVT) qui n'est pas supérieure à 45 mPas.

26. Agents de traitement de puits de forage selon les revendications 17 à 25,
caractérisés en ce qu'
aussi les adjuvants et les additifs usuels utilisés conjointement sont choisis sous le critère de la compatibilité sur le plan écologique et en particulier sont dépourvus de dérivés de métaux lourds toxiques solubles.

27. Agents de traitement de puits de forage selon les revendications 17 à 26,
caractérisés en ce qu'
ils sont ajustés à une valeur de pH dans la zone de 7,5 à 11.
